# EUROPEAN PATENT SPECIFICATION

(11) **EP 1 302 070 B1**
(45) Date of publication and mention of the grant of the patent: **30.03.2005**
(21) Application number: 01941936.5
(22) Date of filing: 05.06.2001
(51) Int. Cl.: H04N 5/50

(54) **METHOD AND SYSTEM FOR ENABLING CHANNEL SET UP IN A TELEVISION SIGNAL RECEIVER**
VERFARHEN UND SYSTEM ZUR ERMÖGLICHUNG EINES KANALAUFBAUS IN EINEM FERNSEHSIGNALEMPFÄNGER
PROCEDE ET SYSTEME DE CONFIGURATION DE CANAL DANS UN RECEPTEUR DE SIGNAUX DE TELEVISION

(30) Priority: 09.06.2000 US 210596 P
(43) Date of publication of application: 16.04.2003
(73) Proprietor: Thomson Licensing S.A., 92648 Boulogne Cedex (FR)
(72) Inventor: PUGEL, Michael, Anthony, Noblesville, IN 46060 (US); MUTERSPAUGH, Max, Ward, Indianapolis, IN 46250 (US)
(74) Representative: Kohrs, Martin
(86) International application number: PCT/US2001/018147
(87) International publication number: WO 2001/097513

(56) References cited:
- EP-A- 0 813 302
- PATENT ABSTRACTS OF JAPAN vol. 1998, no. 14, 31 December 1998 (1998-12-31) & JP 10 257402 A (TOSHIBA AVE), 25 September 1998 (1998-09-25)
- PATENT ABSTRACTS OF JAPAN vol. 018, no. 687 (E-1651), 26 December 1994 (1994-12-26) & JP 06 276010 A (FUJITSU GENERAL), 30 September 1994 (1994-09-30)
- PATENT ABSTRACTS OF JAPAN vol. 2000, no. 05, 14 September 2000 (2000-09-14) & JP 2000 059180 A (SONY ELECTRONICS INC), 25 February 2000 (2000-02-25) -& US 6 137 546 A (SHINTANI ET AL.) 24 October 2000 (2000-10-24)

## Description

The present invention generally relates to facilitating a set up process in a device such as a television signal receiver, and more particularly, to a method and system for providing such a device with information regarding available channels at a given location and enabling antenna control. The advent of digital television ("DTV") provides users with improved image quality as compared to conventional signal formats. However, it also presents a new challenge to the reception capability of a television signal receiver or set top box receiver. The DTV system has been particularly sensitive to problems in signal reception. These problems may require more elaborate solutions than simply connecting a conventional antenna such as rabbit ears to the receiver.

One advancement being proposed involves a controllable antenna. Such an antenna is capable of pointing in a particular direction to promote improved signal reception and help remove undesired artifacts, such as ghosts or interference elements. Operating such an antenna, however, even to receive just a few broadcast channels can be quite troublesome and time consuming for a user. This problem can be particularly overwhelming for users in certain locations where many channels are available. Conventional auto-scan search features employed in many analog television systems offer little relief since they may not be capable of detecting all of the available DTV channels. Accordingly, there is a need for an improved technique for assisting users in setting up their television systems and achieving good channel reception.

"The document "Patent Abstract JP 10 257402" - published 25/9/1998, discloses a channel system with a television receiver, a network, and a server where the receiver stores channel list information downloaded from the server based on users location. The frequencies corresponding to channel are downloaded for providing information concerning the sender and tuning the reception means.

The present invention as set out in the appended claims, enables channel set up and antenna control in a television signal receiver to optimize channel tuning. According to an exemplary embodiment, a television signal receiver such as a DTV receiver includes a memory for receiving and storing data provided from a storage medium. The data includes a channel list having one or more channels available for reception by the television signal receiver at a designated location and antenna control information corresponding to each of the one or more channels in the channel list. According to an embodiment, the storage medium is a database, and the channel list and antenna control information are downloaded from the database to the memory of the television signal receiver via the internet. According to another embodiment, the storage medium is a CD-ROM or other similar data storage device. The storage medium is preferably updated periodically to provide current channel information and current antenna control information. The channel information and the corresponding antenna control information are used to assist users in setting up their television systems and achieving proper channel tuning.

The above-mentioned and other features and advantages of this invention, and the manner of attaining them, will become more apparent and the invention will be better understood by reference to the following description of embodiments of the invention taken in conjunction with the accompanying drawings, wherein:
FIG. 1 is a schematic diagram illustrating a system suitable for implementing the present invention; and
FIG. 2 is a flowchart illustrating exemplary steps for practicing the present invention.

The exemplifications set out herein illustrate preferred embodiments of the invention, and such exemplifications are not to be construed as limiting the scope of the invention in any manner.

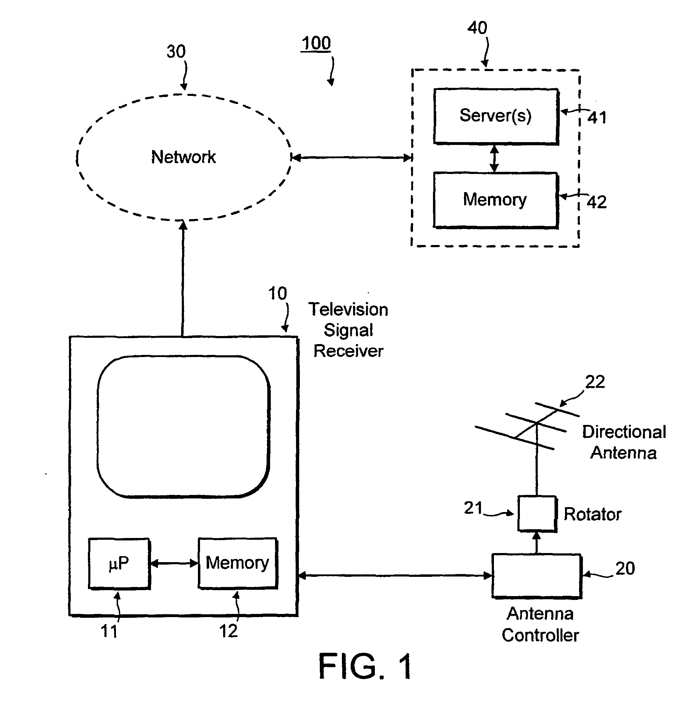

Referring now to the drawings, and more particularly to FIG. 1, a schematic diagram of a system suitable for implementing the present invention is shown. In FIG. 1, a system 100 includes a television signal receiver 10 such as a DTV receiver having a microprocessor (µP) 11 and a memory 12. The microprocessor (µP) 11 controls the storage and retrieval of data to and from the memory 12. The television signal receiver 10 is operably coupled to an antenna controller 20 which controls a rotator 21 to adjust the position of a directional antenna 22 associated with the television signal receiver 10. The television signal receiver 10 is also operably coupled to a network 30 such as an intranet or the global communications network known as the internet. A database system 40 is operably coupled to the network 30. The database system 40 includes one or more servers 41 which are operably coupled to a memory 42 to control the storage and retrieval of data to and from the memory 42, and enable transmission of data over the network 30. The memory 42 operates as a storage medium for storing data including channel information and corresponding antenna control information for a plurality of different geographical locations. According to an exemplary embodiment, the channel information includes a list of analog and/or digitally broadcast channels available for terrestrial and/or satellite reception at the plurality of different geographical locations. The antenna control information provides antenna-related data for each of the available channels at the plurality of different locations. That is, the antenna control information may indicate the direction in which an antenna should be pointed for a given channel at a given location. Additionally, the antenna control information may indicate a preferred configuration for an antenna at a given location. The channel information and the antenna control information may also provide data such as the direction of signal transmitters and an approximate signal condition indicator for different channels and antennas at various locations. The channel information and the antenna control information are preferably updated periodically to provide current information. As will be described later herein, the channel information and the corresponding antenna control information are used to assist users in setting up their television systems and achieving good channel tuning.

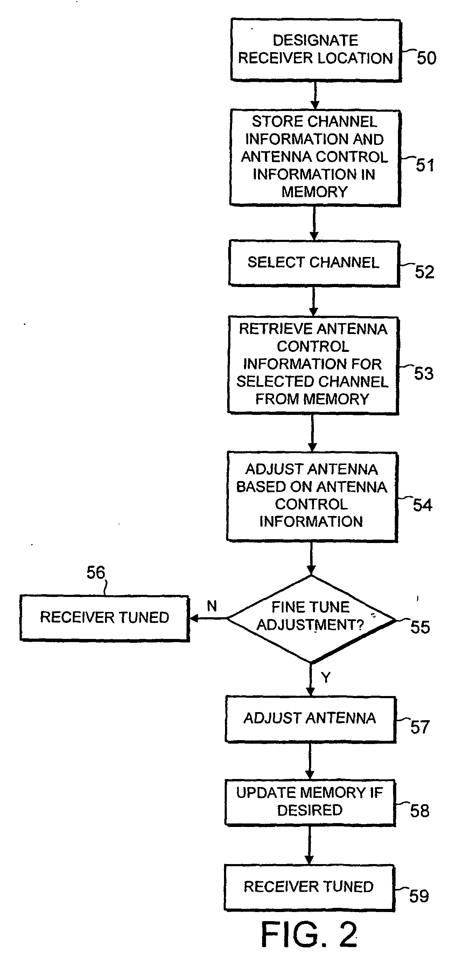

Referring now to FIG 2, a flowchart illustrating exemplary steps for practicing the present invention is shown. For purposes of explanation and example, the steps of FIG. 2 will be described in relation to the system 100 of FIG. 1. At step 50, a user provides inputs designating the location of the television signal receiver 10. According to an embodiment, the user may provide a mailing address, telephone number, zip code and/or any other identification information corresponding to the location where the particular television system is intended for use. At step 51, channel information representative of the one or more channels available for reception at the location designated in step 50 and corresponding antenna control information for the channels is stored in the memory 12 of the television signal receiver 10 under the control of microprocessor (µP) 11. Steps 50 and 51 can be performed in a variety of different ways. According to an exemplary embodiment, a user provides inputs to the television signal receiver 10 enabling a communication link between the television signal receiver 10 and the database system 40 via the network 30. Based on the location information provided by the user in step 50, the server 41 accesses the memory 42 and enables the applicable channel information and corresponding antenna control information to be downloaded to the television signal receiver 10 via the network 30. Since the channel information and antenna control information stored in the memory 42 of the database system 40 is preferably updated on a periodic basis, the user can be assured that current information is being provided. Alternatively, steps 50 and 51 can be performed without a network link by loading the memory 12 of the television signal receiver 10 with the channel information and antenna control information directly from a storage medium, such as a CD-ROM, floppy disk or the like, which preferably stores current information. This may require the television signal receiver 10 to include an internal device such as a disk drive, or means for connecting to such a device externally. In essence, steps 50 and 51 represent the process for initially setting up (i.e., programming) the television signal receiver 10 for use. These steps may be performed, for example, at the user's residence or at the place of purchase.

Once the television signal receiver 10 is initially set up for use, the user may select a channel for viewing at step 52. In order to tune the television signal receiver 10 to the selected channel, the memory 12 of the television signal receiver 10 is accessed to retrieve antenna control information corresponding to the selected channel at step 53. Then, at step 54, the television signal receiver 10 causes the antenna controller 20 to control the rotator 21 and adjust the position of the antenna 22 (if necessary) based on the retrieved antenna control information for the selected channel. Next, at step 55, the user is provided an opportunity to perform an additional, fine tune adjustment of the antenna 22. This fine tune adjustment may be performed manually through user inputs to the antenna controller 20, or may be performed by any known algorithm wherein the position of the antenna 22 is fine tune adjusted based on the quality of the received signal. Alternatively, if the user is satisfied with the channel reception after step 54 is performed, he or she may decide not to perform an additional fine tune adjustment of antenna 22 at step 55. In this case, process flow advances to step 56 where the television signal receiver 10 is determined to be properly tuned to the selected channel.

However, should the user decide to perform the fine tune adjustment at step 55, process flow thereafter advances to step 57 where a fine tune adjustment of the antenna 22 is performed. Next, at step 58, the memory 12 of the television signal receiver 10 may be optionally updated (if the user desires) in accordance with the fine tune adjustment. That is, the antenna control information for the selected channel may be updated in the memory 12 of the television signal receiver 10 to reflect the fine tune adjustment. After the fine tune adjustment at step 57 and the optional memory 12 update at step 58, process flow advances to step 59 where the television signal receiver 10 is determined to be properly tuned to the selected channel. In the aforementioned manner, the present invention advantageously provides two stages of antenna control. The first stage occurs at step 54 and is based on the initial set up data stored in the memory 12 of the television signal receiver 10, and the second stage occurs during the fine tune adjustment at step 57. Steps 53 through 59 may be repeated in the aforementioned manner each time a new channel is selected.

As described herein, the present invention provides significant advantages over conventional channel set up and auto-programming techniques. Although the present invention has been described in relation to a television signal receiver, the invention is applicable to various systems capable of receiving off-the-air broadcast signals, either with or without display devices, and the phrases "television signal receiver," "digital television signal receiver" or "television system" as used herein are intended to encompass various types of apparatuses and systems including, but not limited to, television sets that include a display device, and systems or apparatuses such as a set-top box, video tape recorder (VTR), digital versatile disk (DVD) player, video game box, or personal video recorder (PVR) that may not include display devices.

## Claims

1. A method for enabling channel set up in a television signal receiver (10), comprising steps of:
receiving from a storage medium (40) as first input data to said television signal receiver (10), a channel list including one or more channels available for reception by said television signal receiver (10) at a designated location; and **characterized in that** it comprises a step
receiving from said storage medium (40) as second input data to said television signal receiver (10), antenna control information for adjusting the position of antenna corresponding to each source of said one or more channels in said channel list and the location of each receiver.

2. The method of claim 1, further comprising a step of:
storing the channel list and the antenna control information in a memory (12) of said television signal receiver (10).

3. The method of claim 1, further comprising a first step of:
controlling an antenna (22) associated with said television signal receiver (10) in dependence upon said antenna control information.

4. The method of claim 3, further comprising a second step of:
controlling said antenna (22) associated with said television signal receiver (10), said second step of controlling said antenna (22) being performed at a user's option after said first step of controlling said antenna (22).

5. The method of claim 1, wherein:
said storage medium (40) is a database, and said channel list and antenna control information are transmitted from said database to said television signal receiver (10) over an internet (30).

6. The method of claim 5, wherein:
said database (40) is periodically updated to provide current channel information and current antenna control information.

7. The method of claim 1, wherein:
said storage medium (40) is a CD-ROM.

8. The method of claim 1, wherein:
said television signal receiver (10) is a digital television signal receiver.

9. The method of claim 1, wherein:
said one or more channels in said channel list are available for reception by said television signal receiver (10) at said designated location via terrestrial broadcast.

10. A database system (40) for enabling channel set up in a television signal receiver (10), said database system, comprising:
memory means (42) for storing a channel list including one or more channels available for reception by said television signal receiver (10) at a designated location, and control information for adjusting the position of antenna corresponding to each source of said one or more channels in said channel list and the location of each receiver; and
means (41) for enabling transmission of said channel list and antenna control information to said television signal receiver (10) via a communications network (30).

11. The database system of claim 10, wherein:
said communications network is an internet (30).

12. The database system of claim 10, wherein:
said memory means (42) is periodically updated to provide current channel information and current antenna control information.

13. The database system of claim 10, wherein:
said one or more channels in said channel list are available for reception by said television signal receiver (10) at said designated location via terrestrial broadcast.

14. The database system of claim 10, wherein:
said television signal receiver (10) is a digital television signal receiver.

15. The database system of claim 10, wherein said memory means (42) is a CD-ROM.

16. A television receiver (10), for using the database system defining in any of the claims 10 to 15.

## Patentansprüche

1. Verfahren zur Ermöglichung eines Kanalaufbaus in einem Fernsehsignalempfänger (10) mit folgenden Schritten:
Empfang von ersten Eingangsdaten von einem Speichermedium (40) zu dem Fernsehsignalempfänger (10), einer Kanalliste mit einem oder mehreren Kanälen, die für den Empfang durch den Fernsehsignalempfänger (10) bei einer vorbestimmten Lage verfügbar sind,
**gekennzeichnet durch** den folgenden Schritt:
Empfang von Antennensteuerinformationen von dem Speichermedium (40) als zweite Eingangsdaten zu dem Fernsehsignalempfänger (10) zur Einstellung der Stellung der Antenne entsprechend jeder Quelle des einen oder der mehreren Kanäle in der Kanalliste und der Lage jedes Empfängers.

2. Verfahren nach Anspruch 1 mit folgendem Schritt:
Speicherung der Kanalliste und der Antennensteuerinformationen in einem Speicher (12) des Fernsehsignalempfängers (10).

3. Verfahren nach Anspruch 1 mit einem ersten Schritt von:
Steuerung einer Antenne (22) für den Fernsehsignalempfänger (10) in Abhängigkeit von den Antennensteuerinformationen.

4. Verfahren nach Anspruch 3 mit einem zweiten Schritt von:
Steuerung der Antenne (22) für den Fernsehsignalempfänger (10), wobei der zweite Schritt der Steuerung der Antenne (22) auf Wunsch eines Benutzers nach dem ersten Schritt der Steuerung der Antenne (22) erfolgt.

5. Verfahren nach Anspruch 1, wobei:
das Speichermedium (40) eine Datenbank ist und die Kanalliste und die Antennensteuerinformationen über das Internet (30) von der Datenbank zu dem Fernsehsignalempfänger (10) übertragen werden.

6. Verfahren nach Anspruch 5, wobei:
die Datenbank (40) periodisch aktualisiert wird zur Lieferung von laufenden Kanalinformationen und laufenden Antennensteuerinformationen.

7. Verfahren nach Anspruch 1, wobei:
das Speichermedium (40) ein CD-ROM ist.

8. Verfahren nach Anspruch 1, wobei:
der Fernsehsignalempfänger (10) ein digitaler Fernsehsignalempfänger ist.

9. Verfahren nach Anspruch 1, wobei:
der eine oder die mehreren Kanäle in der Kanalliste zum Empfang durch den Fernsehsignalempfänger (10) bei den bestimmten Lagen über das terrestrische Sendenetz verfügbar sind.

10. Datenbanksystem (40) zur Ermöglichung eines Kanalaufbaus in einem Fernsehsignalempfänger (10) mit:
Speichermitteln (42) zur Speicherung einer Kanalliste mit einem oder mehreren Kanälen, die für den Empfang durch den Fernsehsignalempfänger (10) bei einer bestimmten Lage verfügbar sind, und Steuerinformationen für die Einstellung der Antennenstellung entsprechend jeder Quelle des einen oder der mehreren Kanäle in der Kanalliste und der Lage jedes Empfängers, und
Mitteln (41) zur Ermöglichung der Übertragung der Kanalliste und der Antennensteuerinformationen zu dem Fernsehsignalempfänger (10) über ein Kommunikationsnetz (30).

11. Datenbanksystem nach Anspruch 10, wobei:
das Kommunikationsnetz ein Internet (30) ist.

12. Datenbanksystem nach Anspruch 10, wobei:
die Speichermittel (42) periodisch aktualisiert werden zur Bildung von laufenden Kanalinformationen und laufenden Antennensteuerinformationen.

13. Datenbanksystem nach Anspruch 10, wobei:
der eine oder die mehreren Kanäle in der Kanalliste für den Empfang durch den Fernsehsignalempfänger (10) bei der bestimmten Lage über terrestrischen Rundfunk verfügbar sind.

14. Datenbanksystem nach Anspruch 10, wobei:
der Fernsehsignalempfänger (10) ein digitaler Fernsehsignalempfänger ist.

15. Datenbanksystem nach Anspruch 10, wobei:
die Speichermittel (42) durch ein CD-ROM gebildet sind.

16. Fernsehempfänger (10) zur Anwendung des Datenbanksystems nach einem der Ansprüche 10 bis 15.

## Revendications

1. Procédé permettant l'installation de canaux dans un récepteur de signaux de télévision (10), comportant les étapes de :
réception, en provenance d'un support de mémorisation (40), de premières données d'entrée destinées audit récepteur de signaux de télévision (10), d'une liste de canaux comprenant un ou plusieurs canal(ux) disponible(s) à la réception par ledit récepteur de signaux de télévision (10) à un endroit désigné ;
et **caractérisé en ce qu'**il comporte une étape de
réception en provenance dudit support de mémorisation (40) comme deuxièmes données d'entrée destinées audit récepteur de signaux de télévision (10) d'informations de commande d'antenne pour régler la position d'une antenne correspondant à chaque source desdits canaux de ladite liste de canaux et à l'emplacement de chaque récepteur.

2. Procédé selon la revendication 1, comportant en outre une étape de stockage de la liste de canaux et des informations de commande d'antenne dans une mémoire (12) dudit récepteur de signaux de télévision (10).

3. Procédé selon la revendication 1, comportant en outre un première étape de commande d'une antenne (22) associée audit récepteur de signaux de télévision (10) en fonction desdites informations de commande d'antenne.

4. Procédé selon la revendication 3, comportant en outre une deuxième étape de commande de ladite antenne (22) associée audit récepteur de signaux de télévision (10), ladite deuxième étape de commande de ladite antenne (22) étant réalisée, au choix de l'utilisateur, après ladite première étape de commande de ladite antenne (22).

5. Procédé selon la revendication 1, dans lequel ledit support de mémorisation (40) est une base de données, et ladite liste de canaux et informations de commande d'antenne sont transmises à partir de ladite base de données audit récepteur de signaux de télévision (10) sur un réseau Internet (30).

6. Procédé selon la revendication 5, dans lequel ladite base de données (40) est périodiquement mise à jour pour fournir des informations sur les canaux et des informations de commande d'antenne actualisées.

7. Procédé selon la revendication 1, dans lequel ledit support de mémorisation (40) est un disque CD-ROM.

8. Procédé selon la revendication 1, dans lequel ledit récepteur de signaux de télévision (10) est un récepteur de signaux de télévision numérique.

9. Procédé selon la revendication 1, dans lequel lesdits canaux de la liste de canaux sont disponibles à la réception par ledit récepteur de signaux de télévision (10) audit emplacement désigné par diffusion terrestre.

10. Système de base de données (40) permettant l'installation de canaux dans un récepteur de signaux de télévision (10), ledit système de base de données comportant :
un moyen de mémoire (42) pour stocker une liste de canaux comprenant un ou plusieurs canal(ux) disponible(s) à la réception par ledit récepteur de signaux de télévision (10) à un emplacement désigné et des informations de commande pour régler la position d'une antenne correspondant à chaque source desdits canaux de ladite liste de canaux et à l'emplacement de chaque récepteur ; et
un moyen (41) permettant la transmission audit récepteur de signaux de télévision (10) de ladite liste de canaux et desdites informations de commande d'antenne par l'intermédiaire d'un réseau de communications (30).

11. Système de base de données selon la revendication 10 dans lequel ledit réseau de communications est un réseau Internet (30).

12. Système de base de données selon la revendication 10, dans lequel ledit moyen de mémoire (42) est mis à jour périodiquement pour fournir des informations sur les canaux et des informations de commande d'antenne actualisées.

13. Système de base de données selon la revendication 10, dans lequel lesdits canaux de ladite liste de canaux sont disponibles à la réception par ledit récepteur de signaux de télévision (10) audit emplacement désigné par diffusion terrestre.

14. Système de base de données selon la revendication 10, dans lequel ledit récepteur de signaux de télévision (10) est un récepteur de signaux de télévision numérique.

15. Système de base de données selon la revendication 10, dans lequel ledit moyen de mémoire (42) est un disque CD-ROM.

16. Téléviseur (10) destiné à être utilisé avec le système de base de données défini dans n'importe laquelle des revendications 10 à 15.
